(19) **Europäisches Patentamt**

**European Patent Office**

**Office européen des brevets**

(11) **EP 1 727 113 A1**

(12) **EUROPEAN PATENT APPLICATION**
published in accordance with Art. 158(3) EPC

(43) Date of publication:
**29.11.2006 Bulletin 2006/48**

(51) Int Cl.:
*G09G 3/22* (2006.01)       *G09G 3/20* (2006.01)
*H04N 5/68* (2006.01)

(21) Application number: **05720479.4**

(22) Date of filing: **10.03.2005**

(86) International application number:
**PCT/JP2005/004208**

(87) International publication number:
**WO 2005/088592 (22.09.2005 Gazette 2005/38)**

(84) Designated Contracting States:
**DE FR GB IT NL**

(30) Priority: **15.03.2004 JP 2004073029**

(71) Applicant: **KABUSHIKI KAISHA TOSHIBA**
**Tokyo 105-8001 (JP)**

(72) Inventors:
• **OBAYASHI, Toshio**
**IPD, Toshiba Corporation**
**Tokyo 105-8001 (JP)**
• **SAKAMOTO, Tsutomu**
**IPD, Toshiba Corporation**
**Tokyo 105-8001 (JP)**

• **ARAI, Takayuki**
**IPD, Toshiba Corporation**
**Tokyo 105-8001 (JP)**
• **YANAMOTO, Masao**
**IPD, Toshiba Corporation**
**Tokyo 105-8001 (JP)**

(74) Representative: **Klusmann, Peter**
**Hoffmann - Eitle**
**Patent- und Rechtsanwälte**
**Arabellastrasse 4**
**D-81925 München (DE)**

(54) **DISPLAY AND DISPLAYING METHOD**

(57)    Provided is a display device, including a first gamma correcting section which divides a first color signal that configures a given video image signal into N regions in accordance with a size, which then carries out gamma correction by using a first coefficient specific to a first color signal which is different depending on each region, and which outputs a first correction signal, a second gamma correcting section which divides a second color signal which is different from the first color signal that configures the video image signal into N regions in accordance with a size, which then carries out gamma correction by using a second coefficient specific to the second color signal which is different from the first coefficient depending on each region, and which outputs a second correction signal, a generating section which generates drive signals having amplitude values which are different from each other depending on each of the N regions in response to the first and second correction signals from the first and second gamma correcting sections, and a display section which displays an image in response to the drive signal from the generating section, wherein gradation property of a color video image signal, in particular, of that of a low region, is improved.

FIG. 1

Printed by Jouve, 75001 PARIS (FR)

**Description**

Technical Field

The present invention relates to a display device such as a field emission display, and particularly to a display device and a display method, the display device being driven by drive currents of different amplitude values while dividing video image signals made of a plurality of color video image signals into a plurality of regions by color video signals; determining coefficients of proper gamma correction by color video image signals and by regions; and carrying out gamma correction by color video image signals and by regions.

Background Art

For example, a matrix driven image display device called a field emission display (FED) has become prevalent. In such an image display device, there are known a method using a pulse width modulation system for modulating a pulse width of a drive current supplied to a display section in accordance with a size of a video image signal in order to improve the gradation property of the video image signal; and a bias voltage application system that varies an amplitude value of the drive current.

In patent document 1 (Jpn. Pat. Appln. KOKAI Publication No. 2003-114638), there is disclosed an image display device using a shared system with the pulse width modulation system and bias voltage application system in order to improve the gradation property of the image display device. In this device, when levels of element voltages V1, V2, V3, and V4 are defined so that drive currents $I_e$ become equal to each other in intervals, respectively, the drive current $I_e$ and light emission luminescence are proportional to each other, and a relationship between an input and light emission luminescence becomes linear. However, a video image signal has gamma characteristics because it is assumed that the signal is displayed on a cathode-ray tube in general. Therefore, in the case where a video image signal having gamma characteristics is displayed on a display device having linear characteristics, it is necessary to apply reversed gamma characteristics to a video image signal to be inputted.

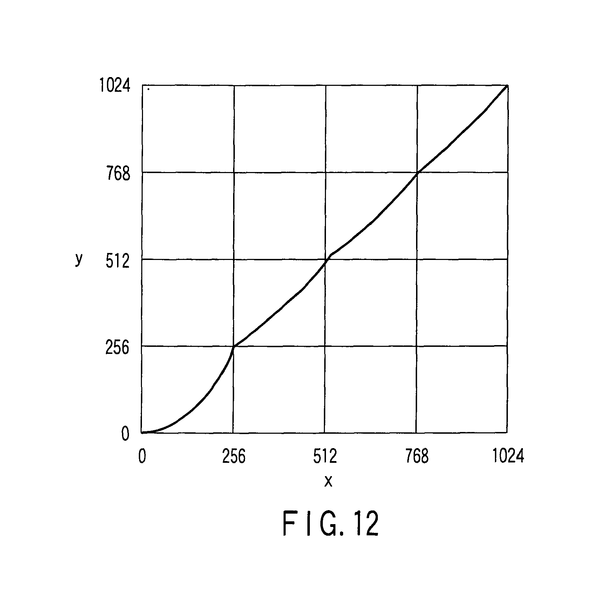

In a conventional device, there is provided a display device using a shared system with the above-described pulse width modulation system and bias voltage application system, in which reverse gamma correction is carried out using a lookup table for the reverse gamma correction as shown in FIG. 12. In FIG. 12, let us consider that an input of reverse gamma correction is 10 bits, an output thereof is 10 bits, and reverse gamma characteristics are a 2.2 power. Assuming that input data is "x" and output data is "y", the output data can be represented by the following formula.

$$y = 1023 \times (x/1023)^{2.2}$$

When the output data "y" is rounded off below a decimal point, 1024 gradation of the input data is decreased to 734 gradations of the output data.

In addition, a gradient of a gamma curve is gentle with respect to the fact that input data is on a low gradation side. Thus, for example, 256 gradations of the input data become 49 gradations of the output data, and gradation count to be expressed significantly decreases. Therefore, there is a problem that image quality is significantly lowered.

Disclosure of Invention

It is an object of the present invention to provide a display device using a pulse width modulation system for modulating a pulse width of a drive current of a display section and a bias voltage application system which varies an amplitude value, in which color video image signals of video image signals to be inputted are divided into a plurality of regions, respectively, and proper gamma correction coefficients are determined by the color video image signals and by regions, thereby gamma-correcting color video image signals and displaying video images.

A display device of the present invention comprises: a first gamma correcting section which divides a first color signal that configures a given video image signal into N regions in accordance with a size, which then carries out gamma correction by using a first coefficient specific to a first color signal which is different depending on each region, and which outputs a first correction signal; a second gamma correcting section which divides a second color signal which is different from the first color signal that configures the video image signal into N regions in accordance with a size, which then carries out gamma correction by using a second coefficient specific to the second color signal which is different from the first coefficient depending on each region, and which outputs a second correction signal; a generating section which generates drive signals having amplitude values which are different from each other depending on each of the N regions in response to the first and second correction signals from the first and second gamma correcting sections; and a display section which displays an image in response to the drive signal from the generating section.

In the display device according to the present invention, for example, an R video image signal, a G video image signal, and a B video image signal configuring given video image signals are divided into N regions, respectively, according to their sizes, and a display section is driven by means of drive signals having amplitude values different depending on regions. That is, the video image signals are divided into four regions, for example, in accordance with their sizes, the amplitude value of a drive signal is increased in stepwise manner in respective regions, and further, in each region, a pulse width is varied in response to the value of the video image signal, thereby enabling fine gradation expression.

In such a display device sharing a bias voltage modulation system and a pulse width modulation system, the display device is a field emission display or the like instead of a cathode-ray tube, and thus, reverse' gamma correction must be applied to a video image signal. It should be noted that R, G, and B video image signals do not always have the same gradation properties. In addition, in each region as well, their gradation properties are different from each other. Therefore, in a gamma correction section of the invention, reverse gamma correction of regions of color video image signals is carried out by calculating optimum coefficients for respective regions of color video image signals, and generating a lookup table using the coefficients by regions of color video image signals and employing the table. In this manner, reverse gamma correction of optimal values that correspond to respective regions of color video image signals is carried out. Thus, in particular, gradation properties of a dark portion on a screen is improved more remarkably than conventionally, and further, for example, optimal gradation properties fully considering a difference in color characteristics of the R, G, and B video image signals can be obtained. In this manner, for example, in addition to the shading of human's hair or a cloudy sky pattern, colors close to jet black can be displayed with rich expression.

Brief Description of Drawings

FIG. 1 is a block diagram depicting an example of a configuration of a display device according to the present invention.
FIG. 2 is a graph depicting an example of a relationship between a drive current and light emission luminescence of the display device according to the present invention.
FIG. 3 is a graph depicting an example of ideal reverse gamma correction to be carried out by the display device according to the present invention.
FIG. 4 is a view showing an example of a drive signal from a drive signal generating section of the display device according to the present invention.
FIG. 5 is a graph depicting an example of a desired relationship between an input signal "x" and luminescence "Y" in the display device according to the present invention.
FIG. 6 is a graph depicting an example of a relationship between an element voltage and a drive current in the display device according to the present invention.
FIG. 7 is a graph depicting an example of a relationship between a correction signal and light emission luminescence using gamma correction in the display device according to the present invention.
FIG. 8 is a graph depicting an example of a relationship between an input signal and an output signal using first gamma correction in the display device according to the present invention.
FIG. 9 is a graph depicting an example of a relationship between an output signal "y" and light emission luminescence Y using gamma correction in the display device according to the present invention.
FIG. 10 is a graph depicting an example of a relationship between an input signal and an output signal using second gamma correction in the display device according to the present invention.
FIG. 11 is a graph depicting a relationship between gradation and a luminescence signal Y in the display device according to the present invention.
FIG. 12 is a graph depicting an example of a relationship between an input signal and an output signal using gamma correction in the display device according to the present invention.
FIG. 13 is a block diagram depicting another example of a configuration of the display device according to the present invention.

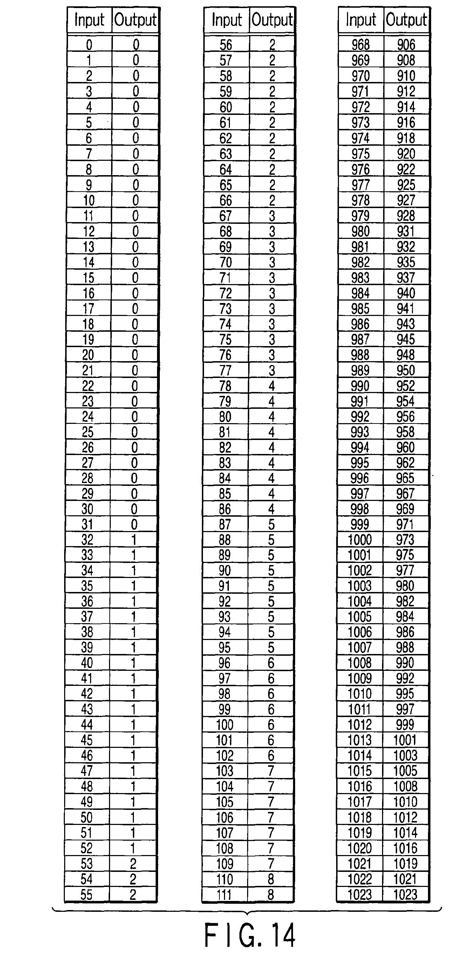

FIG. 14 is an example of a lookup table for use in reverse gamma correction.

Best Mode for Carrying Out the Invention

Hereinafter, embodiments of a display device according to the present invention will be described in detail with reference to the accompanying drawings.

<Display device according to the present invention>

(Configuration)

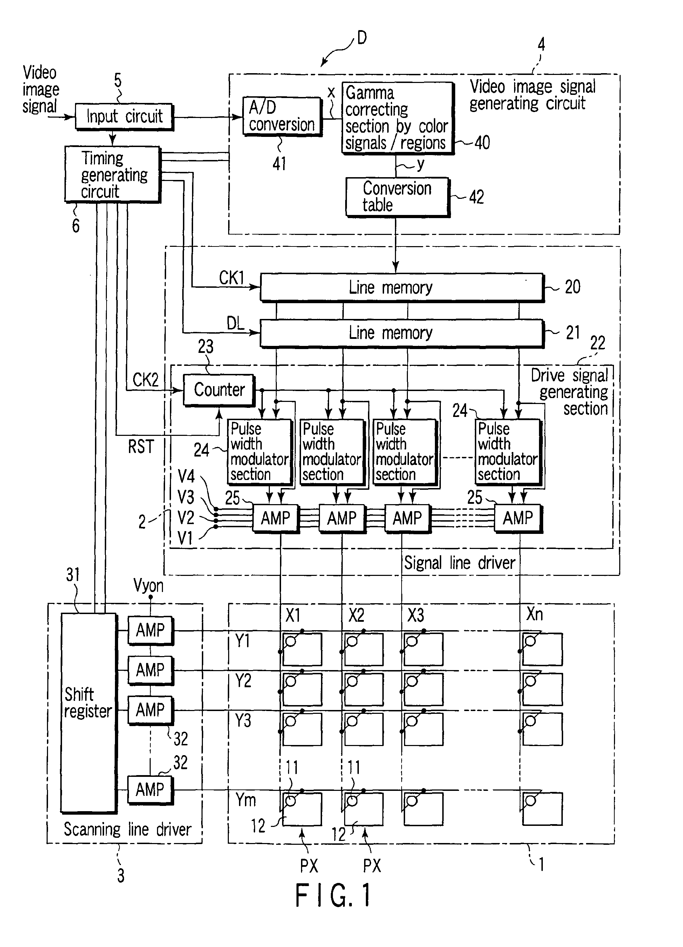

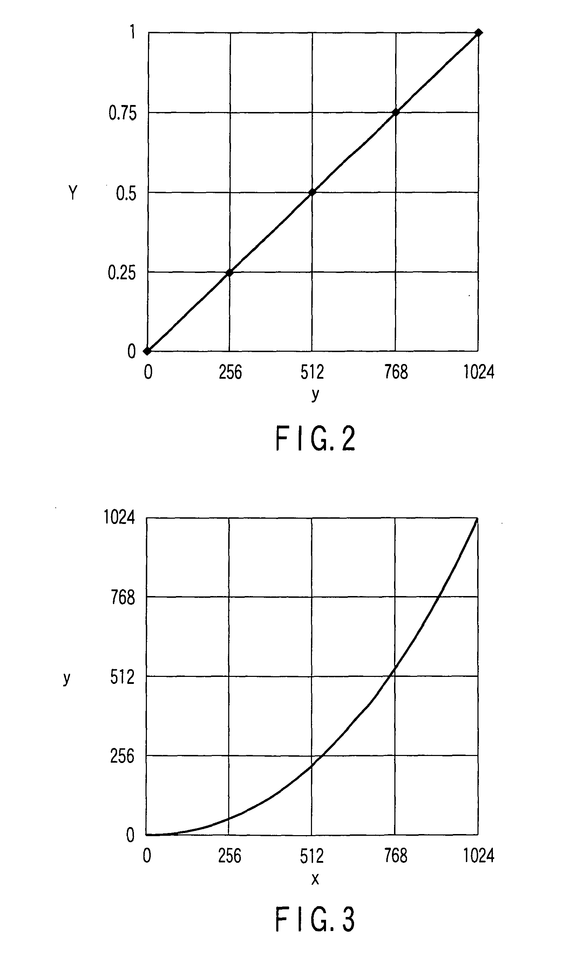

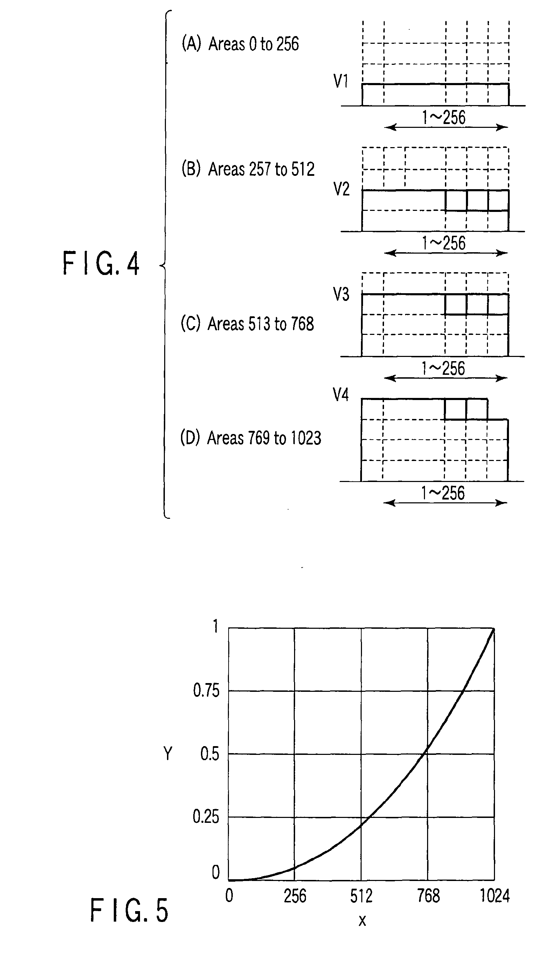

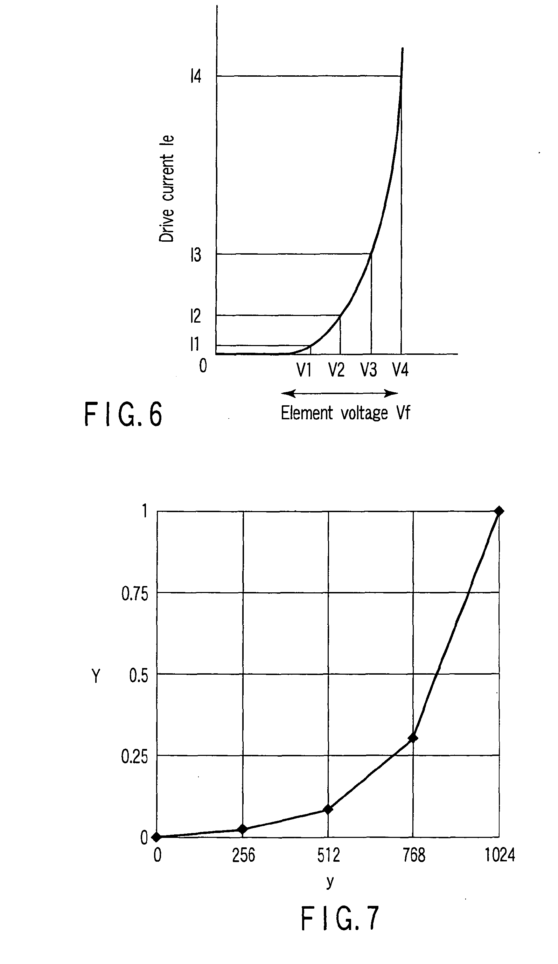

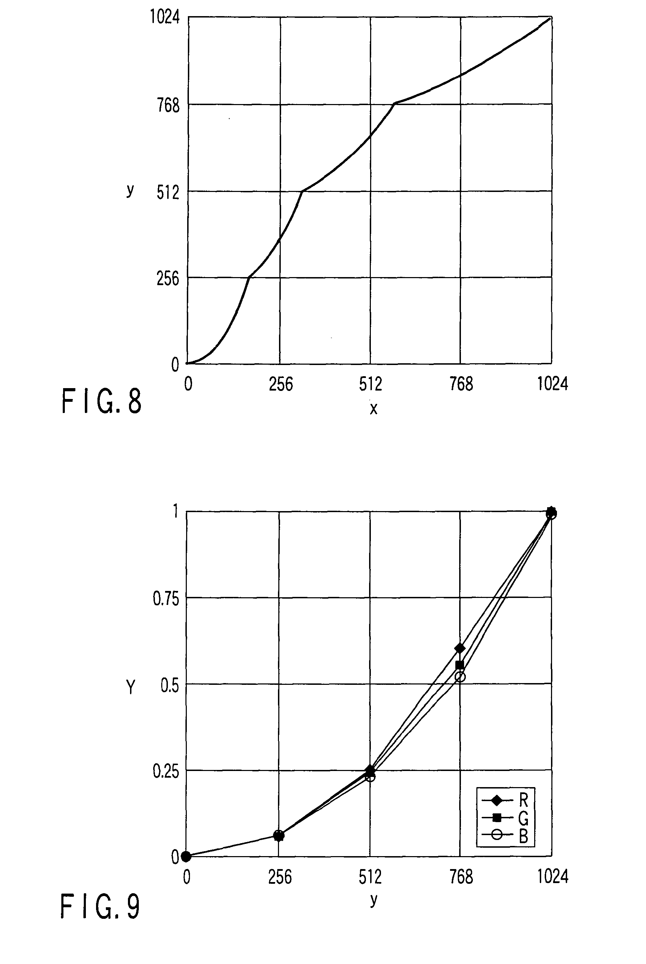

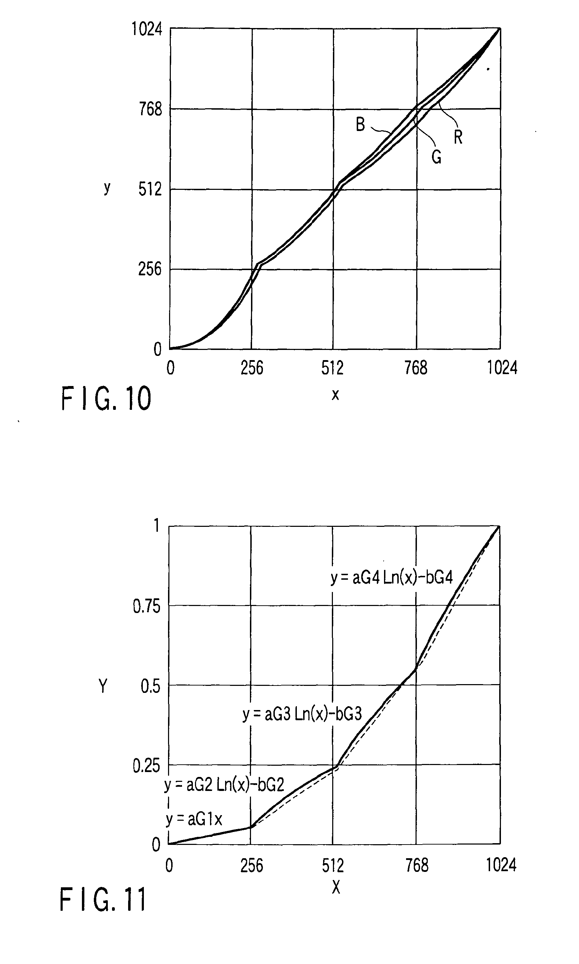

A display device according to the present invention will be described below in detail with reference to the accompanying drawings. FIG. 1 is a block diagram depicting an example of a configuration of a display device according to the present invention. FIG. 2 is a graph depicting an example of a relationship between a drive current and light emission luminescence of the display device according to the present invention. FIG. 3 is a graph depicting an example of ideal reverse gamma correction to be carried out by the display device according to the present invention. FIG. 4 is a view showing an example of a drive signal from a drive signal generating section of the display device according to the present invention. FIG. 5 is a graph depicting an example of a desired relationship between an input signal "x" and luminescence "Y" in the display device according to the present invention. FIG. 6 is a graph depicting an example of a relationship between an element voltage and a drive current in the display device according to the present invention. FIG. 7 is a graph depicting an example of a relationship between a correction signal and light emission luminescence using gamma correction in the display device according to the present invention. FIG. 8 is a graph depicting an example of a relationship between an input signal and an output signal using first gamma correction in the display device according to the present invention. FIG. 9 is a graph depicting an example of a relationship between an output signal "y" and light emission luminescence Y using gamma correction when luminescence has been actually measured at four points of y = 256, 512, 768, and 1023 by RGB in the display device according to the present invention. FIG. 10 is a graph depicting a relationship between an input signal and an output signal using second gamma correction in the display device according to the present invention, the graph depicting an example of values calculated by a conversion formula described later using the luminescence YR1 to YR4, YG1 to YG4, and YB1 to YB4 at y = 256, 512, 768, and 1023 shown in FIG. 9. FIG. 11 is a graph depicting a relationship between gradation and a luminescence signal Y in the display device according to the present invention. FIG. 12 is a graph depicting an example of a relationship between an input signal and an output signal using gamma correction in the display device according to the present invention.

In FIG. 1, a display device D according to the present invention comprises: a display panel 1 for displaying an image; a signal line driver 2 for supplying a drive signal to this display panel 1; a scanning line driver 3 for supplying a scanning line signal to this display panel 1 similarly; a video image signal processing circuit 4 for supplying a video image signal subjected to reverse gamma conversion to a scanning line driver; an input circuit 5 for supplying a digitized video image signal to the video image signal processing circuit 4; and a timing generating circuit 6 for supplying an operation timing based on a video image signal from the input circuit 5 to the scanning line driver 3, the video image signal processing circuit 4, and the signal line driver 2.

Here, the display panel 1 has, on its support substrate: m (= 720) scanning lines Y ($Y_1$ to $Y_m$) extending in a transverse (horizontal direction; n (= 1280 × 3) signal lines × ($X_1$ to $X_n$) extending in a longitudinal (vertical) direction while crossing these scanning lines $Y_1$ to $Y_m$; and m x n (= about 2,760,000) display pixels PX allocated in the vicinity of the cross positions of these scanning lines $Y_1$ to $Y_m$ and signal lines $X_1$ to $X_m$. Each color display pixel is composed of three display pixels PXs adjacent to each other in a horizontal direction. In this color display pixel, three display pixels PXs each are composed of surface conducting type electron emission elements 11 and red (R), green (G), and blue (B) phosphors 12 illuminated by the electron beams emitted from these electron emission elements 11. Each scanning line Y is used as a scanning electrode connected to the electron emission element 11 of a display pixel PX of a corresponding line, and each signal line X is used as a signal electrode connected to the electron emission element 11 of display pixel PX of a corresponding column.

The above-described signal line driver 2, scanning line driver 3, video image signal processing circuit 4, input circuit 5, and timing generating circuit 6 are used as drive circuits of the display panel 1, and are allocated at the periphery of the display panel 1. The signal line driver 2 is connected to the signal lines $X_1$ to $X_n$, and the scanning line driver 3 is connected to the scanning lines $Y_1$ to $Y_m$. The input circuit 5 carries out an input processing operation of an analog RGB video image signal and a sync signal supplied from an external signal source; supplies the video image signal to the video image signal processing circuit 4; and supplies the sync signal to the timing generating circuit 6. The video image signal processing circuit 4 carries out a signal processing operation of a digital format in response to a video image signal from the input circuit 5. The timing generating circuit 6 controls an operation timing of the signal line driver 2, the scanning line driver 3, and the video image signal processing circuit 4 based on the sync signal. Under this control, the scanning line driver 3 sequentially drives the scanning lines $Y_1$ to $Y_m$ by using the scanning signal; and the signal line driver 2 drives the signal lines $X_1$ to $X_n$ by means of a signal line drive signal of a voltage pulse system while each of the scanning lines $Y_1$ to $Y_m$ is driven by means of the scanning line driver 3.

Here, the video image signal processing circuit 4 has: an AD converter circuit 41 for converting analog RGB video image signals supplied from the input circuit 5 in synchronism with a horizontal sync signal into a digital format; a gamma correcting section 40 for gamma-correcting the thus converted digital signal as described later; and a conversion table memory 42 for converting the gamma-corrected digital RGB video image signals into a value adapted to the voltage pulse system of a signal line drive signal.

In addition, in the AD converter circuit 41, with respect to each display pixel PX, for example, analog RGB video image signals are converted into 10-bit gradation data that can be displayed with 1024 gradations. The conversion table memory 42 stores in the conversion table 1024 10-bit conversion data allocated to all gradation values of the gradation data.

The signal line driver 2 includes a line memory 20, a line memory 21, and a drive signal generating section 22. The line memory 20 samples video image signals for one horizontal line in synchronism with a clock CK1 supplied from the timing generating circuit 6 in each horizontal scanning period, and outputs these video image signals, i.e., n gradation data in parallel. The line memory 21 latches these items of gradation data in response to a latch pulse DL supplied from the timing generating circuit 6 in a state in which all the gradation data have been outputted from the line memory 20, and holds the gradation data in subsequent one horizontal scanning period in which the line memory 20 makes sampling operation again.

The drive signal generating section 22 generates, as signal line drive signals, "n" voltage pulses each having a pulse amplitude and a pulse width corresponding to the gradation data outputted from the line memory 21 in parallel, and supplies them to the signal lines $X_1$ to $X_n$. The drive signal generating section 22 includes a counter 23, n pulse width modulator circuits 24, and n output buffers 25. The counter 23 is composed of 10 bits; is initialized in response to a reset signal RST supplied from the timing generating circuit 6 concurrent with start of each horizontal scanning period; counts up a clock CK2 supplied from the timing generating circuit 6 following this reset signal RST; and outputs 10-bit count data that represents an effective video image period by a 1024-stepwise time length from among the horizontal scanning periods. Each pulse width modulator circuit 24 consists of a comparator that compares the corresponding gradation data supplied from the line memory 21, for example, with the count data supplied from the counter 23 and outputs a voltage pulse of a pulse width equal to a period required for the count data to reach the gradation data. Each output buffer 25 is configured to select externally supplied element voltages V1, V2, V3, and V4 based on the significant two bits of the gradation data supplied to the corresponding pulse width modulator circuit 24, and then, output the selected element voltage by a period equal to a pulse width of a pulse voltage from this pulse width modulator circuit 24. In this manner, the voltage pulse from the pulse width modulator circuit 24 is amplified to a pulse amplitude equal to any one of these element voltages V1, v2, V3, and V4. A signal line drive signal is obtained as a positive voltage having a pulse amplitude and a pulse width that depends on the gradation value of gradation data.

The scanning line driver 3 includes: a shift register 31 for shifting vertical sync signals by one horizontal scanning period, and then, outputting the signals from one of "m" output terminals; and "m" output buffers 32 for outputting scanning signals to scanning lines $Y_1$ to $Y_m$ in response to the pulses from these "m" output terminals. This scanning signal is provided as a negative voltage $V_y$ on supplied from the scanning voltage terminal, and is outputted by one horizontal scanning period. In each electron emission element 11, electric discharge occurs when an element voltage Vf between electrodes made of a signal line X and a scanning line Y has exceeded a threshold, and the electron beam emitted thereby excites the phosphor 12. The luminescence of each display pixel PX is controlled by means of a drive current $I_e$ that flows the electron emission element 11 depending on the pulse width and pulse amplitude of a signal line drive signal.

Here, the scanning line driver 2 outputs, for example, a signal line drive signal having a signal waveform as shown in FIG. 4. That is, a given video image signal is divided into four regions in accordance with the size, and then, a display section is driven by means of a drive signal having amplitude values V1 to V4 that depend on the regions. The video image signal is divided into four regions (A) to (D), for example, in accordance with the size, the amplitude values V1 to V4 of the drive signal are increased in a stepwise manner in each region, and further, in each region, a pulse width is varied in response to a value of a video image signal, thereby enabling fine gradation expression.

Specifically, in the case where an input gradation value is in the range of 0 to 256, this input gradation value is converted into an output gradation value ranging from 0 to 256, as shown in FIG. 4A. In this manner, the pulse amplitude of a signal line drive signal is set to a voltage value equal to the element voltage V1, and the pulse width is set to a time length ranging from 0 to 256 in response to this output gradation value.

In the case where the input gradation value is in the range of 257 to 512, this input gradation value is converted into an output gradation value ranging from 512 to 769, as shown in FIG. 4B. In this manner, a pulse width is set to a time length ranging from 0 to 256 in response to this output gradation value. During that period, a pulse amplitude of a signal line drive signal is set to a voltage value equal to an element voltage V2. During the subsequent period (up to 256), a pulse amplitude is set to an element voltage V1.

In the case where the input gradation value is in the range of 513 to 768, this input gradation value is converted into an output gradation value ranging from 1024 to 1280, as shown in FIG. 4C. In this manner, a pulse width is set to a time length ranging from 0 to 256 in response to this output gradation value. During that period, a pulse amplitude of a signal line drive signal is set to a voltage value equal to an element voltage V3. During the subsequent period (up to 256), a pulse amplitude is set to an element voltage V2.

In the case where the input gradation value is in the range of 769 to 1024, this input gradation value is converted into an output gradation value ranging from 1536 to 1792, as shown in FIG. 4D. In this manner, a pulse width is set to a time length ranging from 0 to 256 in response to this output gradation value. During that period, a pulse amplitude of a signal line drive signal is set to a voltage value equal to an element voltage V4. During the subsequent period (up to 256), a pulse amplitude is set to an element voltage V3.

<Gamma correcting processing operation>

Now, referring to a graph, a detailed description will be given below with respect to a processing operation of a gamma correcting section 40 by color signals/regions of the display device according to the present invention. In general, in a display device such as a field emission display, as shown in FIG. 2, a relationship between an input signal and light emission luminescence becomes linear. However, a video image signal has gamma characteristics because it is assumed that the signal is displayed on a cathode-ray tube in general. Therefore, in a display device such as a field emission display, it is necessary to carry out reverse gamma correction in order to display a video image signal that includes the gamma characteristics.

Furthermore, as depicted in a graph showing a relationship between each output signal "y" and each luminescence signal Y by RGB shown in FIG. 9 (four-point measurement when output signal "y" is 256, 512, 768, and 1024) or in a graph showing a relationship between an output signal "y" and a luminescence signal Y of a G video image signal caused by continuous measurement of a G signal shown in FIG. 11, for example, in a display device such as a field emission display, it is known that saturation characteristics of three-color phosphors used are different from each other depending on colors, and a relationship between a pulse width and luminescence Y are not always identical among the R, G, and B video image signals. Further, it is found that the characteristics are different from each other by regions. Therefore, there is a need for preparing a lookup table according to a specific proper coefficient by color signals. At the same time, for example, there is a need for preparing a lookup table according to a specific proper coefficient by the above-described four regions, and then, correcting the video image signals.

In a gamma correcting section 40 by color signals/regions included in the video image signal processing circuit 4 of the display device D shown in FIG. 1, a 10-bit input signal "x" is inputted to the gamma correcting section 40, and its output signal "y" is also 10 bits. Here, assuming that normalization luminescence displayed on a panel is Y and desired gamma characteristics are $\gamma = 2.2$, a desired relationship between the input signal "x" and the luminescence Y is established as a relationship such that trajectory as shown in FIG. 5 is drawn because the desired gamma characteristics are $\gamma = 2.2$, and can be represented as $Y = (x/1023)^{2.2}$.

(Gamma correction table calculating method)

In the gamma correcting section 40 by color signals/regions of the display device according to the present invention, in order to achieve such a relationship between an input signal "x" and luminescence Y, normalization luminescence Y of the display section 1 is obtained by supplying a video image signal to the display device at the factory manufacture stage, for example, and actually measuring light beams from the phosphor 12. Then, in response to the actually measured luminescence Y, a lookup table of a correction table that meets the following relational formula is further generated by the above-described region, for example, by R, G, and B video image signals, and is stored in a storage region or the like of the gamma correcting section 40 by color signals/regions. Then, using these lookup tables, the video image signal is corrected to a state close to that shown in FIG. 5 described above.

That is, first, as in a graph depicting a relationship between en element voltage and a drive current shown in FIG. 6, a description will be given with respect to the case where the element electric potentials V1 to V4 are set to be equal to each other in intervals, thereby generating a lookup table.

$$Vn = (V4/4) \times n \ (n = 1, 2, 3, 4)$$

Next, $Y_0 = 0$, $Y_1 = 0.02$, $Y_2 = 0.08$, $Y_3 = 0.3$, and $Y_4 = 1$ are prepared as an example of actually measured values of luminescence of the display section 1 when $y_0 = 0$, $y_1 = 256$, $y_2 = 512$, $y_3 = 768$, $y_4 = 1023$.

At this time, the luminescence $Y_n$ in correction signal yn is as depicted in a graph shown in FIG. 7, and a relationship between the luminescence Y and the gamma correction output value "y" is established as follows:

$$Y = (Y_n - Y_{n-1}) / (y_n - y_{n-1}) \times y$$
$$+ (Y_n - (Y_n - Y_{n-1}) / (y_n - y_{n-1}) \times y_n) \qquad \cdots \quad (1)$$

In this case, a gamma correcting processing operation is divided into a case in which a panel luminescence change is not linear and a case in which a panel luminescence change is linear. This is processed by signals or by regions. Thus, for example, assuming that $YR_n$ is linear and $YG_n$ and $YB_n$ are not linear, it is preferable to carry out different processing operations as follows.

(Case in which panel luminescence change is not linear)

Therefore, when a video image signal is divided into N regions in accordance with its size, an input signal of the video image signal assigned to a gamma correcting section in each region "n" is "x", an output signal from the gamma correcting section is "y", the luminescence by RGB of the display section is $YR_n$, $YG_n$, and $YB_n$, respectively, desired $\gamma$-multiple is $\gamma$ and a natural number when n = 1 to N, and gradation number after gamma correction is K, a gamma correcting processing operation defined in formula (2) of an output signal "y" including an input signal "x" is given by such a lookup table as defined in the graph shown in FIG. 8, which meets the following:

$$yR = \exp(1/aR_n \cdot (x/K)^Y - aR_n/bR_n)$$

where $aR_n$, $bR_n$ meets $YR_n = aR_n \cdot \ln(y) + bR_n$;

$$K \cdot (YR_{n-1})^{1/Y} < x \leqq K \cdot (YR_n)^{1/Y},$$

$$yG = \exp(1/aG_n \cdot (x/K)^Y - aG_n/bG_n)$$

where $aG_n$, $bG_n$ meets $YG_n = aG_n \cdot \ln(y) + bG_n$;

$$K \cdot (YG_{n-1})^{1/Y} < x \leqq K \cdot (YG_n)^{1/Y},$$

$$yB = \exp(1/aB_n \cdot (x/K)^Y - aB_n/bB_n)$$

where $aB_n$, $bB_n$ meets $YB_n = aB_n \cdot \ln(y) + bB_n$;

$$K \cdot (YB_{n-1})^{1/Y} < x \leqq K \cdot (YB_n)^{1/Y} \qquad \cdots \quad (2)$$

(Case in which panel luminescence change is linear)

A case in which a panel luminescence change is linear is given by such a lookup table as defined by a graph shown in FIG. 8, which meets the following:

$$yR = \{(y_n - y_{n-1}) / (YR_n - YR_{n-1})\} \cdot (x/K)^Y$$

$$+ (YR_n \cdot y_{n-1} - y_n \cdot YR_{n-1}) / (YR_n - YR_{n-1}),$$

$$K \cdot (YR_{n-1})^{1/Y} < x \leqq K \cdot YR_n)^{1/Y}$$

$$yG = \{(y_n - y_{n-1}) / (YG_n - YG_{n-1})\} \cdot (x/K)^Y$$

$$+ (YG_n \cdot y_{n-1} - y_n \cdot YG_{n-1}) / (YG_n - YG_{n-1}),$$

$$K \cdot (YG_{n-1})^{1/Y} < x \leqq K \cdot (YG_n)^{1/Y}$$

$$yB = \{(y_n - y_{n-1}) / (YB_n - YB_{n-1})\} \times (x/K)^Y$$

$$+ (YB_n \cdot y_{n-1} - y_n \cdot YB_{n-1}) / (YB_n - YB_{n-1})$$

$$K \cdot (YG_{n-1})^{1/Y} < x \leqq K \cdot (YG_n)^{1/Y} \qquad \cdots \quad (3)$$

That is, here, as an example, there are obtained: a lookup table in a first region, of an R video image signal; a lookup table in a second region, of an R video image signal; a lookup table in a third region, of an R video image signal; a lookup table in a fourth region, of an R video image signal; a lookup table in a first region, of a G video image signal; a lookup table in a second region, of a G video image signal; a lookup table in a third region, of a G video image signal; a lookup table in a fourth region, of a G video image signal; a lookup table in a first region, of a B video image signal; a lookup table in a second region, of a B video image signal; a lookup table in a third region, of a B video image signal; and a lookup table in a fourth region, of a B video image signal. Therefore, for example, it is possible to consider that only the third region of the R video image signal employs a linear lookup table and another lookup table of each region of a video image signal employs a nonlinear lookup table. In this manner, using these lookup tables, in the gamma correcting section 40 by color signals/regions, each color signal "x" is gamma-corrected by regions, and an output signal "y" is outputted.

By such gamma correction, the improvements of luminescence characteristics as described below can be promoted. That is, FIG. 11 shows an example of a change of luminescence of an actually measured G video image signal. In the first region, the luminescence changes substantially linearly, and, in the second to fourth regions, it changes substantially in accordance with $YG_n = aG_n \cdot \ln(y) + bG_n$. Similarly, it is suggested that the R and B video image signals change in accordance with coefficients $aR_n$ and $aB_n$ that are different from each other. Then, FIG. 12 is a graph obtained by producing a lookup table by color signals or by regions, based on the characteristics shown in FIG. 11, thereby measuring a luminescence change due to a relationship between an input signal and an output signal based on a drive signal obtained by carrying out gamma correction.

By comparing FIGS. 11 and 12 (or FIGS. 9 and 10 described above) with each other, in the display device according to the present invention, for example, 256 gradations of input data "x" is obtained as 221 gradations of output data "y". As compared with a conventional device, in particular, it is found that gradation reproducibility at low gradation is improved in accordance with characteristics by color signals and by gradations, enabling high quality image display.

(Calculation method using drive current instead of actually measured value of luminescence $Y_n$)

Lastly, a description will be given with respect to a case in which a value of a formula is independently obtained inside of a display device, and then, a lookup table is obtained, by using a drive current Ie in operation of the display device instead of the above-described method of operating the display device in factory or the like, actually measuring luminescence, and substituting luminescence $Y_n$ that is an actually measured value for the above-described formula. That is, the luminescence $Y_n$ is substantially directly proportional to a drive current in a field emission display, for example. Therefore, it becomes possible to substitute the drive current Ie instead of using the actually measured value of the luminescence $Y_n$.

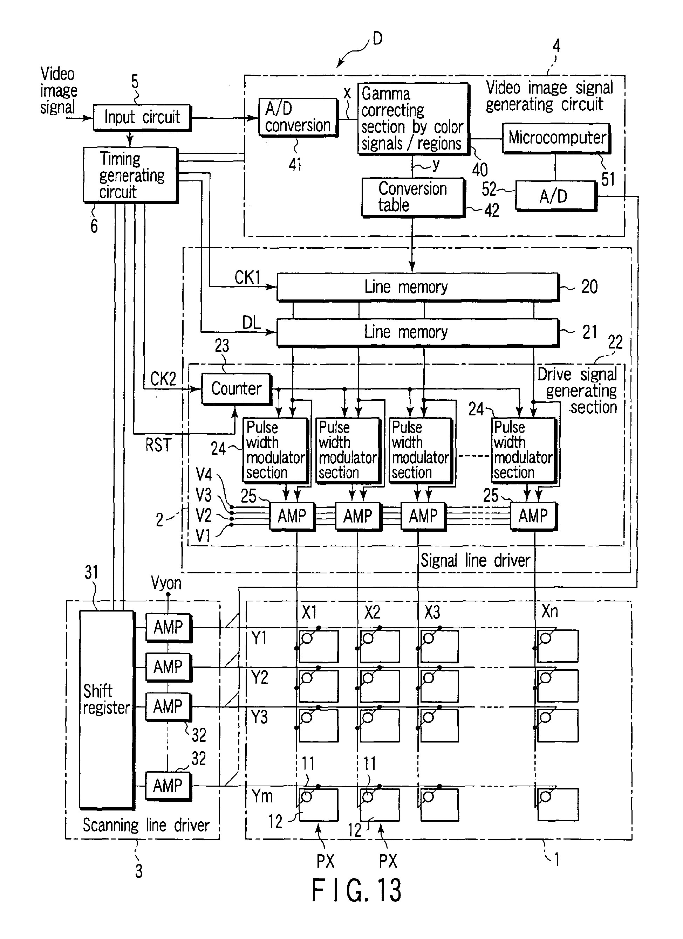

Therefore, as depicted in the block diagram of FIG. 13, the A/D converter section 52 having received a drive current from the scanning line driver 3 supplies to a microcomputer section 51 the drive current as a digital signal. The microcomputer section 51 supplies a digital signal indicating the value of a drive current to the gamma correcting section 40 by color signals/regions.

The gamma correcting section by color signals/regions 40 substitutes a digital signal based on a size of this drive current for formula (2) described above instead of luminescence $Y_n$, and then, obtains a value by signals/regions, thereby generating a lookup table by color signals/regions. The gamma correction section by color signals/regions 40 carries out gamma correction of video image information by color signals/regions by using a lookup table obtained by this generating operation. By such a method, even in the case where a drive current has changed due to a change with elapse of time, gamma correction using an optimal lookup table according to a drive current can be made at an updated value. Thus, there is provided a display device capable of stably displaying a high quality image by always applying optimal gamma correction.

It is preferable to update a lookup table for gamma correction in this display device every set predetermined time (once a year, once a month, or once a week) in a stable mode. In addition, it is preferable to update the lookup table at the time of startup of the display device by turning ON the power. In addition, it is preferable to update the table at the time of deactivation of the display device by turning OFF the power. Further, it is preferable to manually update the table by a user calling a measuring mode.

One skilled in the art can achieve the present invention according to a variety of embodiments described above. It is easy for one skilled in the art to further conceive a variety of modifications of these embodiments, and they can apply to the variety of embodiments even if one does not have any inventive ability. Therefore, the present invention encompasses a broad scope and is not limited to the above-described embodiments without deviating from disclosed principle(s) and novel feature(s).

**Claims**

1. A display device, **characterized by** comprising:

    a first gamma correcting section which divides a first color signal that configures a given video image signal into N regions in accordance with a size, which then carries out gamma correction by using a first coefficient specific to a first color signal which is different depending on each region, and which outputs a first correction signal;
    a second gamma correcting section which divides a second color signal which is different from the first color signal that configures the video image signal into N regions in accordance with a size, which then carries out gamma correction by using a second coefficient specific to the second color signal which is different from the first coefficient depending on each region, and which outputs a second correction signal;
    a generating section which generates drive signals having amplitude values which are different from each other depending on each of the N regions in response to the first and second correction signals from the first and second gamma correcting sections; and
    a display section which displays an image in response to the drive signal from the generating section.

2. A display device, **characterized by** comprising:

    a first gamma correcting section which divides an R video image signal that configures a given video image signal into N regions in accordance with a size, which then carries out gamma correction by using a first coefficient specific to a R video image signal which is different from depending on each region, and which outputs a first correction signal;
    a second gamma correcting section which divides a G video image signal that configures the video image signal into N regions in accordance with a size, which then carries out gamma correction by using a second coefficient specific to a G video image signal which is different from the first coefficient depending on each region, and which outputs a second correction signal;
    a third gamma correcting section which divides a B video image signal that configures the video image signal into N regions in accordance with a size, which then carries out gamma correction by using a third coefficient specific to a B video image signal which is different from the first and second coefficients depending on each region, and which outputs a third correction signal;
a generating section which generates drive signals having amplitude values which are different from each other depending on each of the N regions in response to the first to third correction signals from the first to third gamma correcting sections; and
a display section which displays an image in response to the drive signals from the generating section.

3. The display device according to claim 1 or 2, **characterized in that** the display section is a field emission display.

4. The display device according to claim 1 or 2, **characterized in that** the generating section varies amplitude and a pulse width of the drive signal in accordance with a size of the video image signal.

5. The display device according to claim 1 or 2, **characterized in that** the gamma correcting section determines values of a plurality of coefficients for each of the regions based on actually measured luminescence of the display section, and carries out correction for each region by using the coefficients.

6. The display device according to claim 1 or 2, **characterized in that** the N regions according to the value of the video image signal are four regions.

7. The display device according to claim 1 or 2, **characterized in that** reverse gamma characteristics of a correcting processing operation carried out by the gamma correcting section are a 2.2 power.

8. The display device according to claim 1 or 2, **characterized in that** the generating section generates drive signals having amplitude values which are equal to each other in intervals in a stepwise manner.

9. The display device according to claim 1 or 2, **characterized in that** the gamma correcting section and generating section divides the video image signal into a plurality of regions which are equally divided depending on a size, and then, carries out the gamma connection for each of these regions and generation of the drive signal.

10. The display device according to claim 1 or 2, **characterized in that**, when the video image signal is divided into N regions in accordance with its size, an input signal of the video image signal assigned to the gamma correcting section in each region "n" is "x", an output signal from the gamma correcting section is "y", the luminescence by RGB of the display section is $YR_n$, $YG_n$, and $YB_n$, respectively, desired γ-multiple is γ and a natural number when n = 1 to N, and gradation number after gamma corrected is K, the gamma correcting section carries out correction by using a lookup table that satisfies the following condition:

$$yR = \exp(1/aR_n \cdot (x/K)^\gamma - aR_n/bR_n)$$

where $aR_n$, $bR_n$ meets $YR_n = aR_n \cdot \ln(y) + bR_n$;

$$K \cdot (YR_{n-1})^{1/\gamma} < x \leq K \cdot (YR_n)^{1/\gamma},$$

$$yG = \exp(1/aG_n \cdot (x/K)^\gamma - aG_n/bG_n)$$

where $aG_n$, $bG_n$ meets $YG_n = aG_n \cdot \ln(y) + bG_n$;

$$K \cdot (YG_{n-1})^{1/\gamma} < x \leq K \cdot (YG_n)^{1/\gamma},$$

$$yB = \exp(1/aB_n \cdot (x/K)^\gamma - aB_n/bB_n)$$

where $aB_n$, $bB_n$ meets $YB_n = aB_n \cdot \ln(y) + bB_n$;

$$K \cdot (YB_{n-1})^{1/\gamma} < x \leqq K \cdot (YB_n)^{1/\gamma}$$

**11.** The display device according to claim 10, **characterized in that**, in the case where a luminescence change of the display device has linearity, the gamma correcting section carries out correction by using a lookup table that properly substitutes the following formula for the formula of the lookup table with respect to luminescence having linearity:

$$yR = \{(y_n - y_{n-1})/(YR_n - YR_{n-1})\} \cdot (x/K)^\gamma$$
$$+ (YR_n \cdot y_{n-1} - y_n \cdot YR_{n-1})/(YR_n - YR_{n-1}),$$

$$K \cdot (YR_{n-1})^{1/\gamma} < x \leqq K \cdot YR_n)^{1/\gamma}$$

$$yG = \{(y_n - y_{n-1})/(YG_n - YG_{n-1})\} \cdot (x/K)^\gamma$$
$$+ (YG_n \cdot y_{n-1} - y_n \cdot YG_{n-1})/(YG_n - YG_{n-1}),$$

$$K \cdot (YG_{n-1})^{1/\gamma} < x \leqq K \cdot (YG_n)^{1/\gamma}$$

$$yB = \{(y_n - y_{n-1})/(YB_n - YB_{n-1})\} \times (x/K)^\gamma$$
$$+ (YB_n \cdot y_{n-1} - y_n \cdot YB_{n-1})/(YB_n - YB_{n-1})$$

$$K \cdot (YG_{n-1})^{1/\gamma} < x \leqq K \cdot (YG_n)^{1/\gamma}$$

**12.** The display device according to claim 1 or 2, **characterized by** further comprising a control section which detects a value of the drive signal from the generating section and updates a value of a lookup table for use in the gamma correction based on the detected value.

**13.** A display method, **characterized by** comprising:

dividing a first color signal that configures a given video image signal into N regions in accordance with a size, then carrying out gamma correction by using a first coefficient specific to a first color signal which is different depending on each region and outputting a first correction signal;
dividing a second color signal which is different from the first color signal that configures the video image signal into N regions in accordance with a size, then carrying out gamma correction by using a second coefficient specific to the second color signal which is different from the first coefficient depending on each region and outputting a second correction signal;
generating drive signals having amplitude values which are different from each other depending on each of the N regions in response to the first and second correction signals; and

displaying an image in response to the drive signal.

**14.** A display method, **characterized by** comprising:

dividing an R video image signal that configures a given video image signal into N regions in accordance with a size, then carrying out gamma correction by using a first coefficient specific to a R video image signal which is different depending on each region and outputting a first correction signal;
dividing a G video image signal that configures the video image signal into N regions in accordance with a size, then carrying out gamma correction by using a second coefficient specific to a G video image signal which is different from the first coefficient depending on each region and outputting a second correction signal;
dividing a B video image signal that configures the video image signal into N regions in accordance with a size, then carrying out gamma correction by using a third coefficient specific to a B video image signal which is different from the first and second coefficients depending on each region and outputting a third correction signal;
generating drive signals having amplitude values which are different from each other depending on each of the N regions in response to the first to third correction signals; and
displaying an image in response to the drive signals.

**15.** The display method according to claim 13 or 14, **characterized in that** displaying the image is carried out using a field emission display.

**16.** The display method according to claim 13 or 14, **characterized in that** generating the drive signal varies amplitude and a pulse width of the drive signal in accordance with a size of the video image signal.

**17.** The display method according to claim 13 or 14, **characterized in that** the gamma correction determines values of a plurality of coefficients for each of the regions based on actually measured luminescence (Y) of a display section, and then, carries out correction for each region by using the coefficient.

**18.** The display method according to claim 13 or 14, **characterized in that** the N regions according to the value of the video image signal are four regions.

**19.** The display method according to claim 13 or 14, **characterized in that** reverse gamma characteristics of the gamma correction processing operation are a 2.2 power.

**20.** The display method according to claim 13 or 14, **characterized in that** generating the drive signal generates drive signals having amplitude values $(V_1, V_2, V_3, V_4)$ which are equal to each other in intervals in a stepwise manner, respectively.

**21.** The display method according to claim 13 or 14, **characterized in that** the gamma correction and drive signal generation processing operation divides the video image signal into a plurality of equally divided regions in accordance with a size, and then, carries out the gamma correction for each of the regions and generation of the drive signal.

**22.** The display method according to claim 13 or 14, **characterized in that**, when the video image signal is divided into N regions in accordance with its size, an input signal of the video image signal assigned to a gamma correcting section in each region "n" is "x", an output signal from the gamma correcting section is "y", the luminescence by RGB of the display section is $YR_n$, $YG_n$, and $YB_n$, respectively, desired γ-multiple is γ and a natural number when n = 1 to N, and gradation number after gamma correction is K, the gamma correction carries out correction by using a lookup table that satisfies the following condition:

$$yR = \exp(1/aR_n \cdot (x/K)^Y - aR_n/bR_n)$$

where $aR_n$, $bR_n$ meets $YR_n = ar_n \cdot \ln(y) + bR_n$;

$$K \cdot (YR_{n-1})^{1/Y} < x \leq K \cdot (YR_n)^{1/Y},$$

$$yG=\exp(1/aG_n \cdot (x/K)^Y - aG_n/bG_n)$$

where $aG_n$, $bG_n$ meets $YG_n = aG_n \cdot \ln(y) + bG_n$;

$$K \cdot (YG_{n-1})^{1/Y} < x \leqq K \cdot (YG_n)^{1/Y},$$

$$yB=\exp(1/aB_n \cdot (x/K)^Y - aB_n/bB_n)$$

where $aB_n$, $bB_n$ meets $YB_n = aB_n \cdot \ln(y) + bB_n$;

$$K \cdot (YB_{n-1})^{1/Y} < x \leqq K \cdot (YB_n)^{1/Y}$$

**23.** The display method according to claim 22, **characterized in that**, in the case where a luminescence change of the display device has linearity, the gamma correction carries out correction by using a lookup table that properly substitutes the following formula for the formula of the lookup table with respect to luminescence having linearity:

$$yR=\{(y_n - y_{n-1})/(YR_n - YR_{n-1})\} \cdot (x/K)^Y$$
$$+(YR_n \cdot y_{n-1} - y_n \cdot YR_{n-1})/(YR_n - YR_{n-1}),$$

$$K \cdot (YR_{n-1})^{1/Y} < x \leqq K \cdot YR_n)^{1/Y}$$

$$yG=\{(y_n - y_{n-1})/(YG_n - YG_{n-1})\} \cdot (x/K)^Y$$
$$+(YG_n \cdot y_{n-1} - y_n \cdot YG_{n-1})/(YG_n - YG_{n-1}),$$

$$K \cdot (YG_{n-1})^{1/Y} < x \leqq K \cdot (YG_n)^{1/Y}$$

$$yB=\{(y_n - y_{n-1})/(YB_n - YB_{n-1})\} \times (x/K)^Y$$
$$+(YB_n \cdot y_{n-1} - y_n \cdot YB_{n-1})/(YB_n - YB_{n-1})$$

$$K \cdot (YG_{n-1})^{1/Y} < x \leqq K \cdot (YG_n)^{1/Y}$$

**24.** The display method according to claim 13 or 14, **characterized in that** a value of the drive signal is detected, and then, based on the detected value, a value of a lookup table for use in the gamma correction is updated.

FIG. 1

FIG.2

FIG.3

FIG. 4

(A) Areas 0 to 256

V1

1~256

(B) Areas 257 to 512

V2

1~256

(C) Areas 513 to 768

V3

1~256

(D) Areas 769 to 1023

V4

1~256

FIG. 5

FIG. 6

FIG. 7

FIG.8

FIG.9

F I G. 10

F I G. 11

F I G. 12

F I G. 13

| Input | Output | Input | Output | Input | Output |
|-------|--------|-------|--------|-------|--------|
| 0 | 0 | 56 | 2 | 968 | 906 |
| 1 | 0 | 57 | 2 | 969 | 908 |
| 2 | 0 | 58 | 2 | 970 | 910 |
| 3 | 0 | 59 | 2 | 971 | 912 |
| 4 | 0 | 60 | 2 | 972 | 914 |
| 5 | 0 | 61 | 2 | 973 | 916 |
| 6 | 0 | 62 | 2 | 974 | 918 |
| 7 | 0 | 63 | 2 | 975 | 920 |
| 8 | 0 | 64 | 2 | 976 | 922 |
| 9 | 0 | 65 | 2 | 977 | 925 |
| 10 | 0 | 66 | 2 | 978 | 927 |
| 11 | 0 | 67 | 3 | 979 | 928 |
| 12 | 0 | 68 | 3 | 980 | 931 |
| 13 | 0 | 69 | 3 | 981 | 932 |
| 14 | 0 | 70 | 3 | 982 | 935 |
| 15 | 0 | 71 | 3 | 983 | 937 |
| 16 | 0 | 72 | 3 | 984 | 940 |
| 17 | 0 | 73 | 3 | 985 | 941 |
| 18 | 0 | 74 | 3 | 986 | 943 |
| 19 | 0 | 75 | 3 | 987 | 945 |
| 20 | 0 | 76 | 3 | 988 | 948 |
| 21 | 0 | 77 | 3 | 989 | 950 |
| 22 | 0 | 78 | 4 | 990 | 952 |
| 23 | 0 | 79 | 4 | 991 | 954 |
| 24 | 0 | 80 | 4 | 992 | 956 |
| 25 | 0 | 81 | 4 | 993 | 958 |
| 26 | 0 | 82 | 4 | 994 | 960 |
| 27 | 0 | 83 | 4 | 995 | 962 |
| 28 | 0 | 84 | 4 | 996 | 965 |
| 29 | 0 | 85 | 4 | 997 | 967 |
| 30 | 0 | 86 | 4 | 998 | 969 |
| 31 | 0 | 87 | 5 | 999 | 971 |
| 32 | 1 | 88 | 5 | 1000 | 973 |
| 33 | 1 | 89 | 5 | 1001 | 975 |
| 34 | 1 | 90 | 5 | 1002 | 977 |
| 35 | 1 | 91 | 5 | 1003 | 980 |
| 36 | 1 | 92 | 5 | 1004 | 982 |
| 37 | 1 | 93 | 5 | 1005 | 984 |
| 38 | 1 | 94 | 5 | 1006 | 986 |
| 39 | 1 | 95 | 5 | 1007 | 988 |
| 40 | 1 | 96 | 6 | 1008 | 990 |
| 41 | 1 | 97 | 6 | 1009 | 992 |
| 42 | 1 | 98 | 6 | 1010 | 995 |
| 43 | 1 | 99 | 6 | 1011 | 997 |
| 44 | 1 | 100 | 6 | 1012 | 999 |
| 45 | 1 | 101 | 6 | 1013 | 1001 |
| 46 | 1 | 102 | 6 | 1014 | 1003 |
| 47 | 1 | 103 | 7 | 1015 | 1005 |
| 48 | 1 | 104 | 7 | 1016 | 1008 |
| 49 | 1 | 105 | 7 | 1017 | 1010 |
| 50 | 1 | 106 | 7 | 1018 | 1012 |
| 51 | 1 | 107 | 7 | 1019 | 1014 |
| 52 | 1 | 108 | 7 | 1020 | 1016 |
| 53 | 2 | 109 | 7 | 1021 | 1019 |
| 54 | 2 | 110 | 8 | 1022 | 1021 |
| 55 | 2 | 111 | 8 | 1023 | 1023 |

FIG. 14

<div align="center">

**INTERNATIONAL SEARCH REPORT**

</div>

| | International application No. |
|---|---|
| | PCT/JP2005/004208 |

**A. CLASSIFICATION OF SUBJECT MATTER**
Int.Cl⁷ G09G3/22, 3/20, H04N5/68

According to International Patent Classification (IPC) or to both national classification and IPC

**B. FIELDS SEARCHED**

Minimum documentation searched (classification system followed by classification symbols)
Int.Cl⁷ G09G3/22, 3/20, H04N5/68

Documentation searched other than minimum documentation to the extent that such documents are included in the fields searched
Jitsuyo Shinan Koho          1922-1996   Jitsuyo Shinan Toroku Koho   1996-2005
Kokai Jitsuyo Shinan Koho    1971-2005   Toroku Jitsuyo Shinan Koho   1994-2005

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2003-114638 A (Toshiba Corp.), 18 April, 2003 (18.04.03), Par. Nos. [0063] to [0086]; Figs. 6 to 10 (Family: none) | 1-24 |
| A | JP 7-5836 A (Canon Inc.), 10 January, 1995 (10.01.95), Par. Nos. [0045] to [0060] & US 5654607 A            & EP 0619595 A1 | 1-24 |
| A | JP 2004-347629 A (Canon Inc.), 09 December, 2004 (09.12.04), Par. Nos. [0144] to [0175]; Figs. 19 to 24 (Family: none) | 1-24 |

☒ Further documents are listed in the continuation of Box C.     ☐ See patent family annex.

| | |
|---|---|
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 10 May, 2005 (10.05.05) | 24 May, 2005 (24.05.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

| International application No. |
| --- |
| PCT/JP2005/004208 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2002-311885 A  (Canon Inc.),<br>25 October, 2002 (25.10.02),<br>Par. Nos. [0177] to [0195]; Figs. 12 to 13<br>(Family: none) | 1-24 |
| A | JP 2003-195800 A  (Toshiba Corp.),<br>09 July, 2003 (09.07.03),<br>Full text; all drawings<br>(Family: none) | 1-24 |
| A | JP 7-36405 A  (Pioneer Electronic Corp.),<br>07 February, 1995 (07.02.95),<br>Par. Nos. [0026] to [0030]; Figs. 8 to 9<br>& US 5929835 A | 1-24 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003114638 A